# EUROPÄISCHE PATENTSCHRIFT

(11) **EP 1 270 306 B1**
(45) Veröffentlichungstag und Bekanntmachung des Hinweises auf die Patenterteilung: **22.11.2006**
(21) Anmeldenummer: 02013282.5
(22) Anmeldetag: 18.06.2002
(51) Int. Cl.: B60K 25/06, B60K 17/28

(54) **Regelung zum An- und Auslauf eines Zapfwellenstummels an einem Landfahrzeug**
Control of starting and stopping of a PTO shaft in an agricultural vehicle
Commande de démarrage et d'arrêt d'une prise de force d'un véhicule agricole

(30) Priorität: 29.06.2001 DE 10131477
(43) Veröffentlichungstag der Anmeldung: 02.01.2003
(73) Patentinhaber: CNH Österreich GmbH, 4300 St. Valentin (AT)
(72) Erfinder: Hrazdera, Oliver, Dipl-Ing., 4470 Enns (AT)
(74) Vertreter: Feldkamp, Rainer

(56) Entgegenhaltungen:
- EP-A- 0 443 325
- DE-A- 4 239 530
- US-B1- 6 173 225

## Beschreibung

Die Erfindung betrifft einen Zapfwellenantriebsstrang mit Regelung zum An- und Auslauf eines Zapfwellenstummels an einem Landfahrzeug, insbesondere an einem Traktor, mit den Merkmalen nach dem Oberbegriff des Patentanspruchs 1.

Derartige Regelungen verändern die Menge und damit den Druckaufbau bzw. - abbau der zu einer hydraulisch betätigten Kupplung geleiteten Hydraulikflüssigkeit. Genannte hydraulisch betätigte Kupplung beliebiger Bauart befindet sich dabei im Antriebsstrang auf einer Welle zwischen dem Motor und dem Zapfwellenstummel des Traktors, auf den das eine Ende einer Gelenkwelle aufgesteckt ist und deren anderes Ende mit dem Zapfwellenstummel eines an das Hubwerk des Traktors angehängten Arbeitsgerätes in antriebsmäßiger Verbindung steht.
Für solche Regelungen ist bereits eine Vielzahl von Ausführungsvarianten bekannt geworden, wovon eine in der WO 99/56978 A1 näher erläutert ist. Dort ist am Traktor ein Steuergerät angebracht, das einen Prozessor enthält, der in Abhängigkeit von ihm zugeleiteter Eingangssignale ein spezielles Steuerprogramm abarbeitet und dementsprechende Ausgangssignale erzeugt. Im sogenannten Normalbetrieb kommen die Eingangssignale von je einem Taster zum Ein- bzw. Ausschalten des Zapfwellenstummels sowie von einem Sensor zur Überwachung der Motordrehzahl und einem weiteren Sensor zur Überwachung der Drehzahl des Zapfwellenstummels. Vom Bediener kann wahlweise noch auf einen sogenannten Managementbetrieb umgeschaltet werden, wo dem Steuergerät weitere Eingangssignale über einen Taster zum Einschalten des Managementbetriebs sowie über Sensoren zur Überwachung der Drehzahl der Hinterachse und des Hubwerkstatus (Regeln und Transport) vermittelt werden. Genannte Ausgangssignale werden an ein als Schaltventil fungierendes Magnetventil weitergeleitet, das in dem Fall ein pulsweitenmoduliertes Ein-/ Ausventil ist. Dieses Magnetventil leitet daraufhin den anliegenden Druck der Hydraulikflüssigkeit aus dem Hydraulikkreis des Traktors so an die hydraulisch betätigte Kupplung weiter, daß diese nach dem speziellen Steuerprogramm des Steuergerätes während einer bestimmten Zeitdauer sanft ein- bzw. auskuppelt. Ein Teil der Eingangssignale sichert dabei den störungsfreien Ablauf dieser Funktionen und ein anderer Teil steuert im Managementbetrieb darüber hinaus das Ein- bzw. Auskuppeln der hydraulisch betätigten Kupplung in Abhängigkeit vom Hubwerkstatus des Traktors und von dessen Fahrgeschwindigkeit automatisch, wobei noch zusätzliche Sicherheitsschaltungen zum Schutz des Bedieners installiert sind.
Nachteilig an dieser Steuerung ist, daß sie für ein optimales Ein- bzw. Auskuppeln, worunter ein möglichst schnelles und sanftes Kuppeln zur Vermeidung von Verschleiß an der hydraulisch betätigten Kupplung und die Übertragung von für die Kupplung unschädlich hoher Drehmomente verstanden wird, wesentliche Einsatzbedingungen nicht berücksichtigt. Dazu zählen einmal Veränderungen in der Viskosität der Hydraulikflüssigkeit durch variierende Außentemperaturen. Zum anderen wird durch das spezielle Steuerprogramm im Steuergerät auf den Kupplungsvorgang kein Einfluß genommen, wenn sich im Anlaufmoment stark voneinander unterscheidende Arbeitsgeräte zum Einsatz kommen. Ebenso bleiben die Ausgangsdrehzahlen des Motors im Augenblick des An- bzw. Auslaufes des Zapfwellenstummels im Steuerprogramm unbeachtet, obwohl die bekanntlich infolge unterschiedlicher Leistungsabnahmen vom Motor stark schwanken können. Schließlich wird ein weiterer Nachteil in dieser Steuerung darin gesehen, daß keine Möglichkeit zur manuellen variablen Einstellung für die Sanftheit des Ein- und Auskuppelns vorgesehen ist. Deshalb handelt es sich bei dieser Ausführungsvariante nur um eine ganz normale Steuerung, die bei weitem nicht so variabel wie eine Regelung reagieren kann. Alle genannten Nachteile sind der Grund dafür, daß die so gesteuerte hydraulisch betätigte Kupplung sowie die übrigen Antriebselemente unter diesen Umständen nur eine eingeschränkte Lebensdauer aufweisen, weil der Anlauf zu abrupt vonstatten geht. Außerdem ist an dieser Steuerung noch zu bemängeln, daß im Managementbetrieb auf das Ein- und Auskuppeln der hydraulisch betätigten Kupplung in Abhängigkeit von einer gewünschten Aushubhöhe des Arbeitsgerätes kein Einfluß genommen wird, was aber bei der Unterschiedlichkeit der einsetzbaren Arbeitsgeräte durchaus wünschenswert wäre. Dadurch kann es einmal zu Schäden an der Gelenkwelle kommen, wenn diese vor dem Erreichen hoher Knickwinkel beim Ausheben des Hubwerks nicht rechtzeitig ausgeschaltet bzw. schon beim Vorhandensein eines hohen Knickwinkels zu zeitig wieder eingeschaltet wird. Wird zum anderen im umgekehrten Fall die Gelenkwelle beim Absenken des Hubwerks nicht wieder rechtzeitig eingeschaltet, treten noch Verlustzeiten auf, die die effektive Einsatzzeit des Traktors vermindern und dabei besteht die Gefahr, daß in dem Fall der Motor abgewürgt wird, weil das Arbeitsgerät schon Bodenberührung hat, bevor sich der Zapfwellenstummel dreht.
Eine weitere Ausführungsvariante einer Regelung zum An- und Auslauf eines Zapfwellenstummels an einem Traktor ist mit der EP 0 443 325 A1 beinhaltet die Merkmale, des Oberbegriffs des unabhängigen Anspruchs bekannt geworden, deren hauptsächliche Zielstellung darin besteht, für die hydraulisch betätigte Kupplung und für die nachfolgenden Antriebselemente bis zum Arbeitsgerät kritische Betriebszustände, erhöhten Verschleiß und im Extremfall Zerstörungen an allen Antriebselementen zu vermeiden. Der Aufbau dieser aber ebenfalls nur als Steuerung arbeitenden Regelung stimmt mit der aus der vorstehend beschriebenen Lösung völlig überein, da sie ebenfalls ein Eingangssignale empfangendes und daraus Ausgangssignale bildendes Steuergerät besitzt, wobei die Ausgangssignale an ein als Schaltventil fungierendes Magnetventil zum Ein- oder Auskuppeln der magnetisch betätigten Kupplung im Antriebsstrang zur Gelenkwelle weitergeleitet werden. In einer bevorzugten Ausführungsform ist das Magnetventil ein Proportionalventil, das vom Steuergerät getaktet angesteuert und dadurch betätigt wird. Als Eingangssignal wird einmal die Motordrehzahl überwacht, wobei die hydraulisch betätigte Kupplung vom Steuergerät im Falle des Absinkens der Motordrehzahl unter einen vorgegebenen Grenzwert ausgekuppelt und bei dessen Überschreiten wieder eingekuppelt wird. Als weiteres Eingangssignal werden die Drehzahlen der Eingangswelle und der Ausgangswelle der hydraulisch betätigten Kupplung mittels Sensoren erfaßt, aus denen das Steuergerät bei sich einstellenden Unterschieden den vorhandenen Schlupf errechnet. Übersteigt auch der einen vorgegebenen Grenzwert, wird daraufhin die hydraulisch betätigte Kupplung ausgekuppelt und beim Unterschreiten wieder eingekuppelt. In gleicher Weise werden als Eingangssignale die Drehschwingungen an der Eingangswelle und der Ausgangswelle der hydraulisch betätigten Kupplung verarbeitet. Schließlich wird die Aushubhöhe des Hubwerks am Traktor verfolgt und beim Erreichen eines vorgegebenen Grenzwertes ausgekuppelt. Zum Zwecke des möglichst schnellen und sanften Einkuppelns ist im Steuergerät noch eine Kennlinie gespeichert, deren Funktion mit dem Steuerprogramm aus der Steuerung nach der WO 99/56978 A1 vergleichbar ist. Bezüglich der Nachteile dieser Steuerung wird zur Vermeidung von Wiederholungen auf die Nachteile der zuerst beschriebenen Steuerung verwiesen, weil diese identisch sind. Ein weiterer Nachteil kommt aber für diese Steuerung noch hinzu, da in ihr kein Managementbetrieb vorgesehen ist.

Deshalb liegt der Erfindung die Aufgabe zugrunde, einen Zapfwellenantriebsstrang mit einer Regelung zum An- und Auslauf eines Zapfwellenstummels an einem Landfahrzeug, insbesondere an einem Traktor mit dafür vorgesehenem Normalbetrieb und Managementbetrieb zu schaffen, der ein schnelles und sanftes Kuppeln einer sich zwischen dem Motor und dem Zapfwellenstummel befindenden hydraulisch betätigten Kupplung derart verwirklicht, daß die hydraulisch betätigte Kupplung und die übrigen mit ihr verbundenen Antriebselemente einmal unter allen Einsatzbedingungen und zum anderen auch beim Antrieb von sich im Anlaufmoment stark voneinander unterscheidender Arbeitsgeräte eine maximale Lebensdauer erreichen. Er soll darüber hinaus sowohl im Normalbetrieb als auch im Managementbetrieb die Gelenkwelle vor Zerstörung durch zu große Knickwinkel schützen. Schließlich soll er noch im Managementbetrieb das Auftreten von Verlustzeiten für jedes Arbeitsgerät durch zu spätes Einkuppeln verhindern, wodurch die effektive Einsatzzeit des Traktors verringert würde und er soll das Abwürgen des Motors für den Fall unmöglich machen, wo das Arbeitsgerät schon Bodenberührung hat, bevor sich der Zapfwellenstummel dreht.
Diese Aufgabe wird gemäß der Erfindung mit den Merkmalen nach dem Patentanspruch 1 gelöst, wobei in den Unteransprüchen Merkmale aufgeführt sind, die diese Lösung in vorteilhafter Weise weiterentwickeln.
Durch die Einbeziehung der Temperatur bzw. der Viskosität der Hydraulikflüssigkeit in die Steuerung zum Ein- und Auskuppeln der Zapfwelle wird sichergestellt, daß die hydraulisch betätigte Kupplung auch unter Berücksichtigung des sich damit stark verändernden Fließverhaltens der Hydraulikflüssigkeit dennoch optimal ein- und auskuppelt.
Auch der Einsatz wenigstens eines vom Bediener variabel einstellbaren Reglers zur Veränderung der Zeit für das Ein- und Auskuppeln ist beim Einsatz sehr unterschiedlicher Arbeitsgeräte nützlich, weil damit für jedes Arbeitsgerät ein sanftes Ein- und Auskuppeln realisiert werden kann.
Ebenso verhält es sich mit der Möglichkeit der variablen Einstellung der Position des Hubwerks, bei der die hydraulisch betätigte Kupplung tatsächlich ein- bzw. auskuppeln soll, weil verschiedene Arbeitsgeräte aufgrund ihrer unterschiedlichen Gestalt und Funktion auch in unterschiedlich abgesenkten Positionen bereits ihre volle Drehzahl wieder erreicht haben müssen und sich in bestimmten ausgehobenen Positionen allein aus Sicherheitsgründen auf keinen Fall mehr drehen dürfen. Dazu muß der Bediener nur durch Drehen an dem dafür vorgesehenen variabel einstellbaren Regler den Winkelwert des Hubwerks auswählen, bei dem die hydraulisch betätigte Kupplung vom Magnetventil angesteuert werden soll. Das Erreichen der gewünschten Winkelwerte wird vom Hubwerkstellungssensor signalisiert.
Ein weiteres sehr wesentliches Merkmal der Erfindung sind die in einem Festwertspeicher des Steuergerätes abgelegten sogenannten Lernanlaufkurven für ein optimales Ein- und Auskuppeln der hydraulisch betätigten Kupplung für alle denkbaren Einsatzbedingungen, für unterschiedliche Arbeitsgeräte und für sich verändernde maschinenspezifische Werte in der Zeitspanne des Ein- und Auskuppelns, die eine Funktion der Menge der zur hydraulisch betätigten Kupplung fließenden Hydraulikflüssigkeit in der Zeiteinheit verkörpern. Wie groß die richtige Menge in jedem Augenblick des Ein- und Auskuppelns sein muß, wird vom Prozessor in Abhängigkeit der in das Steuergerät eingehenden Eingangssignalc-errechnet. In den Lernanlaufkurven werden immer die letzten Ein- und Auskuppelvorgänge gespeichert und für die nachfolgenden Vorgänge wieder derart herangezogen, indem die nachfolgenden An- und Ausläufe immer mehr verbessert werden. Aus diesem Grunde ist diese Regelung als selbstlernend zu bezeichnen. Damit ist sichergestellt, daß die neuen Ein- und Auskuppelvorgänge immer näher an den Idealfall herankommen, der in einem sanften Ein- und Auskuppeln in kürzester Zeit gesehen wird. Unter einem Sanftanlauf wird konkret verstanden, daß das Einkuppeln zwar in kürzester Zeit erfolgt, wobei aber die eingestellte Motordrehzahl unvermindert erhalten bleibt. Das Steuergerät ist darüber hinaus beim Einsatz verschiedener Arbeitsgeräte selbst in der Lage, durch Auswertung der Eingangssignale zu erkennen, um welche bekannte Last es sich dabei handelt, und es wählt daraufhin aus den bereits vorher abgespeicherten Lernanlaufkurven die richtige für das erneute Ein- und Auskuppeln aus. Analog reagiert das Steuergerät bei unterschiedlichen Einsatzbedingungen und sich verändernden maschinenspezifischen Werten.
In einer zweckmäßigen Ausgestaltung der Erfindung nach dem Unteranspruch 2 kann durch den Vergleich der Drehzahlen des Zapfwellenstummels und des Motors unter Berücksichtigung des eingelegten Ganges an dem dem Motor nachgeordneten Getriebe festgestellt werden, ob die Drehzahl des Zapfwellenstummels auch tatsächlich den vorgewählten Wert erreicht hat, was einen zusätzlichen Sicherheitsaspekt darstellt. Welcher Gang gerade eingelegt ist, wird von einem auf die Stellung des Schalthebels reagierenden Getriebeübersetzungs- Sensor festgestellt.
Zur Verbesserung des Auslaufs des Arbeitsgerätes einschließlich der mit ihm verbundenen Antriebsteile während des Auskuppelns ,insbesondere für ein schnelles Auslaufen des Arbeitsgerätes in der ausgehobenen Position im Managementbetrieb, hat es sich nach den Merkmalen im Unteranspruch 3 bewährt, auf der Ausgangswelle der hydraulisch betätigten Kupplung eine proportional geregelte Bremse anzuordnen. Mit einer derartigen Bremse kann ein geregelter Auslauf realisiert werden, der wunschgemäß sanft oder abrupter vor sich gehen kann. In einer bevorzugten Ausführung ist die Bremse bei ausgekuppelter hydraulisch betätigter Kupplung angebremst, um insbesondere beim Vorhandensein hoher Viskositäten der Hydraulikflüssigkeit ein ungewolltes Anlaufen des Zapfwellenstummels zu verhindern. Zur Schaffung weiterer Sicherheit kann die Bremse auch im Normalbetrieb in Verbindung mit dem Ausschalter für die hydraulisch betätigte Kupplung eingesetzt werden. Wichtig in beiden Fällen ist, daß die Bremse völlig unabhängig vom Magnetventil vom Steuergerät aus direkt ansteuerbar ist.
Nach den Merkmalen der Unteransprüche 4 und 5 soll auf die besondere Eignung eines Proportionalventils oder eines getakteten ON/OFF- Ventils als Magnetventil in der erfindungsgemäßen Regelung zum An- und Auslauf des Zapfwellenstummels hingewiesen werden.
Zum Einleiten des Einkuppel- und Auskuppelvorganges der hydraulisch betätigten Kupplung bietet es sich nach den Merkmalen der Unteransprüche 6 und 7 an, dafür herkömmliche Schalter als Einschalter und Ausschalter einzusetzen.
Da im Managementbetrieb das Absenken des Hubwerks sehr schnell geht und das Arbeitsgerät schon vor der Bodenberührung ein Drehmoment übertragen muß, hat es sich nach den Merkmalen der Unteransprüche 8 und 9 als zweckmäßig erwiesen, für den Normalbetrieb und den Managementbetrieb einen separaten variabel einstellbaren Regler zur Veränderung der Menge der Hydraulikflüssigkeit und damit der Zeit für das Ein- bzw. Auskuppeln der hydraulisch betätigten Kupplung vorzusehen, um sich diesen unterschiedlichen Bedingungen besser anpassen zu können.

In einer bevorzugten Ausgestaltung der Erfindung nach dem Unteranspruch 10 empfiehlt es sich, das Steuergerät mit einem Mode-Schalter zur Auswahl zwischen dem Normalbetrieb und dem Managementbetrieb zu verbinden. Nach den Merkmalen der Unteransprüche 11 bis 13 wird ein Vorteil darin gesehen, dem Steuergerät als Eingangssignale die augenblickliche Motordrehzahl, die Zapfwellenstummeldrehzahl und das Zapfwellenstummeldrehmoment über Sensoren zuzuführen, weil Schwankungen in diesen Werten andere An- und Auslaufvorgänge erforderlich machen.
Der besseren Übersichtlichkeit wegen für den Bediener hat es sich nach dem Unteranspruch 14 bewährt, in der Bedien- und Anzeigeeinheit des Traktors Kontrollanzeigen anzuordnen. Dazu sollte wenigstens eine Kupplungslampe gehören, die den eingekuppelten Zustand der hydraulisch betätigten Kupplung signalisiert. Weiterhin empfiehlt sich noch eine Managementlampe, die durch Aufleuchten die Aktivität des Managementbetriebes anzeigt.
Sollten einmal die vorstehend erwähnten Lernanlaufkurven aus irgend welchen Gründen im Festwertspeicher des Steuergerätes gelöscht worden sein, wird nach dem Merkmalen im Unteranspruch 15 eine vorteilhafte Lösung darin gesehen, dort zusätzlich sogenannte Default- Kurven abzulegen, auf die dann zurückgegriffen werden kann. Gleiches gilt auch, wenn beispielsweise beim Wechsel der Arbeitsgeräte die daraus resultierenden veränderten Anlaufmomentwerte auf die hydraulisch betätigte Kupplung zu weit von den vorhandenen Lernanlaufkurven abweichen.
Schließlich ist es nach den Merkmalen der Unteransprüche 16 und 17 zu empfehlen, für die Signalverarbeitung der Schalter, Regler, Sensoren sowie Aktuatoren entweder ein CAN-Bussystem oder ein Time- Trigger- Protokoll (TTP) mit gleichem Erfolg einzusetzen.

Abschließend wird eine zweckmäßige Ausgestaltung der Regelung nach den Merkmalen im Unteranspruch 18 darin gesehen, an jedem Arbeitsgerät einen Jobrechner anzubringen, in dem der Typ des Arbeitsgerätes gespeichert ist und der über einen eigenen Arbeitsgerät- BUS mit dem Steuergerät in Verbindung steht. Durch die damit mögliche Identifikation des jeweiligen Arbeitsgerätes stimmt gleich der erste Anlauf des Zapfwellenstummels. Abschließend wird vorsorglich noch darauf verwiesen, daß der Schutzumfang der Erfindung nicht auf einen am Heck eines Landfahrzeuges angeordneten Zapfwellenstummel beschränkt ist, sondern daß er alle anderen Anordnungen ebenfalls mit einschließt.
Damit ergeben sich zusammengefaßt als Vorteile für diesen Zapfwellenantriebsstrang mit Regelung zum An- und Auslauf eines Zapfwellenstummels an einem Landfahrzeug, daß die hydraulisch betätigte Kupplung sowie die übrigen antriebsmäßig mit ihr verbundenen Teile und Baugruppen unter allen Einsatzbedingungen eine maximale Lebensdauer erreichen. Des weiteren ist mit diesem Zapfwellenantriebsstrang sowohl im Normalbetrieb als auch im Managementbetrieb die Gelenkwelle vor Zerstörung durch zu große Knickwinkel geschützt. Schließlich verhindert er noch im Managementbetrieb das Auftreten von Verlustzeiten, wodurch die effektive Einsatzzeit des Traktors mit dem jeweiligen Arbeitsgerät verringert würde, und er macht beim Anlauf des Zapfwellenstummels durch zu frühen Bodenkontakt des Arbeitsgerätes, bei dem sich der Zapfwellenstummel noch nicht dreht, ein Abwürgen des Motors unmöglich.

Die Erfindung soll nun anhand eines Ausführungsbeispieles an einem Traktor näher erläutert werden, wobei die einzelnen Figuren zeigen:
- Fig. 1:: eine schematische Seitenansicht auf einen Traktor mit allen zum Zapfwellenantriebsstrang mit Regelung zum An- und Auslauf eines Zapfwellenstummels gehörenden Bauteilen

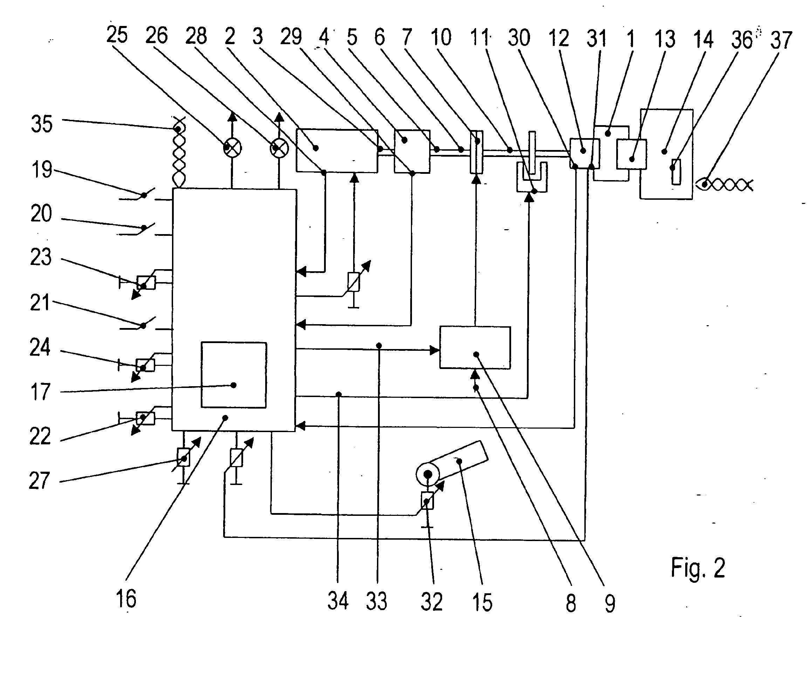

- Fig. 2:: ein elektrisch/hydraulisches Schaltbild vom Zapfwellenantriebsstrang mit Regelung aus Figur 1.

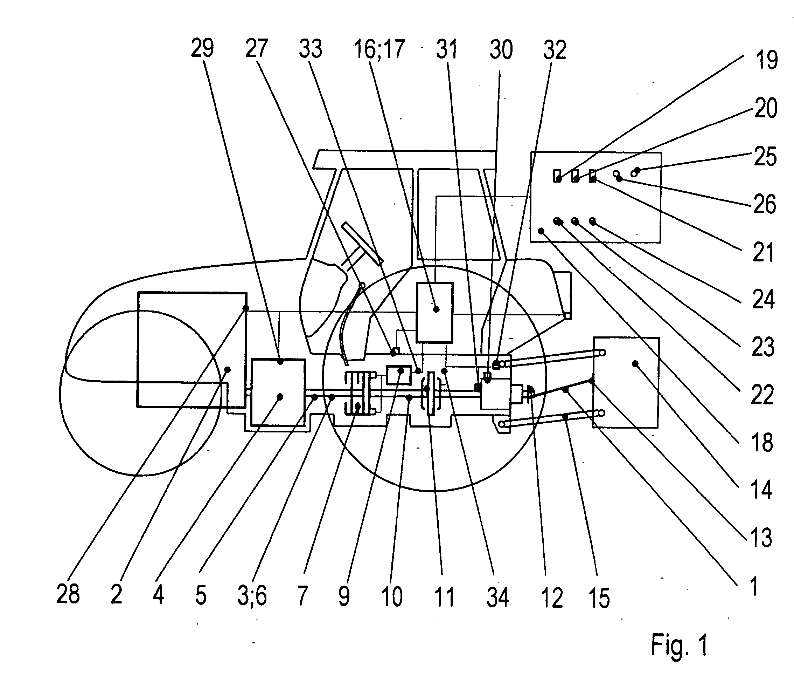

In Figur 1 ist in der Seitenansicht auf die in Fahrtrichtung des Traktors gesehene linke Seite der Antriebsstrang zum Antrieb der Gelenkwelle 1 sichtbar gemacht, der von dessen Motor 2 ausgeht und an den über eine Welle 3 ein Getriebe 4 angeschlossen ist. Bei diesem Getriebe 4 handelt es sich um ein Stirnradschaltgetriebe zur Erzeugung der in der Praxis üblichen Drehzahlen von 540, 750, 1000 oder 1400 Umdrehungen pro Minute, die von dessen Abtriebswelle 5 an die Eingangswelle 6 einer hydraulisch betätigten Kupplung 7 weitergeleitet werden. Aus dem Hydraulikkreis 8 des Traktors wird die hydraulisch betätigte Kupplung 7 mittels eines Magnetventils 9 mit Druck beaufschlagt. Der Antriebsstrang setzt sich über die Ausgangswelle 10 der hydraulisch betätigten Kupplung 7, auf der eine proportional geregelte Bremse 11 beliebiger Bauart angeordnet ist, bis zum Zapfwellenstummel 12 des Traktors fort. Auf den Zapfwellenstummel 12 ist einenends die Gelenkwelle 1 aufgesteckt, die mit ihrem anderen Ende mit dem Zapfwellenstummel 13 des Arbeitsgerätes 14, das in diesem Ausführungsbeispiel heckseitig an das Hubwerk 15 des Traktors angehängt ist, in antriebsmäßiger Verbindung steht.
Zur Regelung zum An- und Auslauf des Zapfwellenstummels 12 gehört als wesentlichstes Bauteil ein Steuergerät 16, in dem ein Prozessor 17 zur Verarbeitung einer Vielzahl von Eingangssignalen und zur Weiterleitung von Ausgangssignalen installiert ist. Ein Teil der Eingangssignale kommt von der sich in der Fahrerkabine des Traktors befindenden Bedien- und Anzeigeeinheit 18, wozu ein Einschalter 19 zum Einkuppeln und ein Ausschalter 20 zum Auskuppeln der hydraulisch betätigten Kupplung 7 zählen. Dazu kommen noch ein Mode-Schalter 21, ein variabel einstellbarer Regler 22 für den Normalbetrieb und ein variabel einstellbarer Regler 23 für den Managementbetrieb zur Veränderung der Menge der weitergeleiteten Hydraulikflüssigkeit und damit der Veränderung der Zeit für das Ein- und Auskuppeln der hydraulisch betätigten Kupplung 7 sowie mindestens ein weiterer variabel einstellbarer Regler 24 zur Bestimmung der Positionen des Hubwerks 15, bei denen die hydraulisch betätigte Kupplung 7 automatisch ein- bzw. auskuppeln soll. Schließlich befinden sich auf der Bedien- und Anzeigeeinheit 18 als Kontrollanzeigen eine Kupplungslampe 25 und eine Managementlampe 26.
Weitere Eingangssignale erhält das Steuergerät 16 vom Ort des Entstehens selbst, wozu ein Sensor 27 zur Messung der Viskosität bzw. der Temperatur der Hydraulikflüssigkeit, ein Motordrehzahlsensor 28, ein Getriebeübersetzungs- Sensor 29 am Getriebe 4, ein Zapfwellenstummel- Drehzahlsensor 30, ein Zapfwellenstummel- Drehmomentsensor 31 und ein Hubwerkstellungssensor 32 gehören.
Die Ausgangssignale gibt das Steuergerät 16 an das Magnetventil 9 über eine Signalleitung 33 und an die Bremse 11 über die Steuerleitung 34 weiter. Zur Signalauswertung der Schalter, Regler, Sensoren sowie Aktuatoren findet ein CAN- Bussystem 35 Anwendung.
Am Arbeitsgerät 14 ist noch ein Jobrechner 36 installiert, in dem der jeweilige Typ des Arbeitsgerätes 14 gespeichert ist und der über seinen Arbeitsgerät-BUS 37 mit dem Steuergerät (16) verbunden ist.

### Bezugszeichenaufstellung

- 1: Gelenkwelle
- 2: Motor
- 3: Welle
- 4: Getriebe
- 5: Abtriebswelle
- 6: Eingangswelle
- 7: hydraulisch betätigte Kupplung
- 8: Hydraulikkreis
- 9: Magnetventil
- 10: Ausgangswelle
- 11: Bremse
- 12: Zapfwellenstummel
- 13: Zapfwellenstummel
- 14: Arbeitsgerät
- 15: Hubwerk
- 16: Steuergerät
- 17: Prozessor
- 18: Bedien- und Anzeigeeinheit
- 19: Einschalter

- 20: Ausschalter
- 21: Mode-Schalter
- 22: variabel einstellbarer Regler
- 23: variabel einstellbarer Regler
- 24: variabel einstellbarer Regler
- 25: Kupplungslampe
- 26: Managementlampe
- 27: Sensor
- 28: Motordrehzahlsensor
- 29: Getriebeübersetzungs-Sensor
- 30: Zapfwellenstummel-Drehzahlsensor
- 31: Zapfwellenstummel-Drehmomentsensor
- 32: Hubwerkstellungssensor
- 33: Signalleitung
- 34: Steuerleitung
- 35: CAN-Bussystem
- 36: Jobrechner
- 37: Arbeitsgerät-BUS

## Patentansprüche

1. Zapfwellenantriebsstrang mit Regelung zum An- und Auslauf eines Zapfwellenstummels an einem Landfahrzeug, insbesondere an einem Traktor, bestehend aus:
◆ einer Eingangswelle (6) zum Anschluß an den Motor (2),
◆ einer hydraulisch betätigten Kupplung (7), die sich im Antriebsstrang zwischen der Eingangswelle (6) und ihrer Ausgangswelle (10), die mit dem Zapfwellenstummel (12)in Verbindung steht, befindet,
◆ einem Magnetventil (9), das vom Hydraulikkreis des Traktors beaufschlagbar ist und das mit der hydraulisch betätigten Kupplung (7) in Verbindung steht,
◆ einem Steuergerät (16) mit Prozessor (17), das über eine Signalleitung (33) Mit dem Magnetventil (9) zur Übermittlung von Ausgangssignalen verbunden ist und das mit Schaltern, Reglern bzw. Sensoren etc. zur Aufnahme von Eingangssignalen in Verbindung steht,
**dadurch gekennzeichnet, daß**
a) einer der Sensoren (27) die Viskosität bzw. die Temperatur der Hydraulikflüssigkeit messender Sensor ist,
b) wenigstens ein variabel einstellbarer Regler (22;23) zur Veränderung der Menge der Hydraulikflüssigkeit und damit zur Veränderung der Zeit für das Ein- bzw. Auskuppeln der hydraulisch betätigten Kupplung (7) vorhanden ist,
c) ein weiterer Sensor ein die augenblickliche Position des Hubwerks (15) feststellender Hubwerkstellungssensor (32) ist, der mit wenigstens einem weiteren variabel einstellbaren Regler (24) zur Bestimmung der Positionen des Hubwerks (15), bei denen die hydraulisch betätigte Kupplung (7) automatisch ein- bzw. auskuppeln soll, verbunden ist,
d) im Steuergerät (16) sich ständig verbessernde Lernanlaufkurven für verschiedene Arbeitsgeräte (14), Einsatzbedingungen und maschinenspezifische Werte gespeichert sind, wobei das Steuergerät (16) daraus durch Auswertung der ihm zugeleiteten Eingangssignale die optimale Lernanlaufkurve für ein erneutes Ein- und Auskuppeln auswählt.

2. Zapfwellenantriebsstrang nach Anspruch 1, **dadurch gekennzeichnet, daß** zwischen dem Motor (2) und der Eingangswelle (6) der hydraulisch betätigten Kupplung (7) ein Getriebe (4) angeordnet ist, dessen Getriebeübersetzungs- Sensor (29) mit dem Steuergerät (16) in Verbindung steht.

3. Zapfwellenantriebsstrang nach den Ansprüchen 1 und 2, **dadurch gekennzeichnet, daß** auf der mit dem Zapfwellenstummel (12) des Traktors verbundenen Ausgangswelle (10) der hydraulisch betätigten Kupplung (7) eine proportional geregelte Bremse (11) angeordnet ist, die mittels einer Steuerleitung (34) mit dem Steuergerät (16) in Verbindung steht.

4. Zapfwellenantriebsstrang nach Anspruch 1, **dadurch gekennzeichnet, daß** das Magnetventil (9) ein Proportionalventil ist.

5. Zapfwellenantriebsstrang nach Anspruch 1, **dadurch gekennzeichnet, daß** das Magnetventil (9) ein getaktetes ON/OFF-Magnetventil ist.

6. Zapfwellenantriebsstrang nach Anspruch 1, **dadurch gekennzeichnet, daß** das Steuergerät (16) mit einem Einschalter (19) zum Einkuppeln der hydraulisch betätigten Kupplung (7) verbunden ist.

7. Zapfwellenantriebsstrang nach Anspruch 1, **dadurch gekennzeichnet, daß** das Steuergerät (16) mit einem Ausschalter (20) zum Auskuppeln der hydraulisch betätigten Kupplung (7) verbunden ist.

8. Zapfwellenantriebsstrang nach Anspruch 1, **dadurch gekennzeichnet, daß** das Steuergerät (16) mit einem variabel einstellbaren Regler (22) zur Veränderung der Menge der Hydraulikflüssigkeit und damit zur Veränderung der Zeit für das Ein- bzw. Auskuppeln der hydraulisch betätigten Kupplung (7) für den Normalbetrieb in Verbindung steht.

9. Zapfwellenantriebsstrang nach Anspruch 1, **dadurch gekennzeichnet, daß** das Steuergerät (16) mit einem variabel einstellbaren Regler (23) zur Veränderung der Menge der Hydraulikflüssigkeit und damit zur Veränderung der Zeit für das Ein- bzw. Auskuppeln der hydraulisch betätigten Kupplung (7) für den Managementbetrieb in Verbindung steht.

10. Zapfwellenantriebsstrang nach den Ansprüchen 1, 8 und 9, **dadurch gekennzeichnet, daß** das Steuergerät (16) mit einem Mode-Schalter (21) zur Auswahl zwischen dem Normalbetrieb und dem Managementbetrieb verbunden ist.

11. Zapfwellenantriebsstrang nach einem oder mehreren der vorstehenden Ansprüche, **dadurch gekennzeichnet, daß** das Steuergerät (16) mit einem Motordrehzahlsensor (28) verbunden ist.

12. Zapfwellenantriebsstrang nach einem oder mehreren der vorstehenden Ansprüche, **dadurch gekennzeichnet, daß** das Steuergerät (16) mit einem Zapfwellenstummel- Drehzahlsensor (30) verbunden ist.

13. Zapfwellenantriebsstrang nach einem oder mehreren der vorstehenden Ansprüche, **dadurch gekennzeichnet, daß** das Steuergerät (16) mit einem Zapfwellenstummel- Drehmomentsensor (31) verbunden ist.

14. Zapfwellenantriebsstrang nach einem oder mehreren der vorstehenden Ansprüche, **dadurch gekennzeichnet, daß** sich in der Bedien- und Anzeigeeinheit (18) des Traktors mehrere optische oder akustische Kontrollanzeigen, beispielsweise eine Kupplungslampe (25) und/oder eine Managementlampe (26), befinden.

15. Zapfwellenantriebsstrang nach einem oder mehreren der vorstehenden Ansprüche, **dadurch gekennzeichnet, daß** in einem Festwertspeicher des Steuergerätes (16) voreingestellte Default- Kurven als eine Funktion der zur hydraulisch betätigten Kupplung (7) geleiteten Menge der Hydraulikflüssigkeit pro Zeiteinheit gespeichert sind.

16. Zapfwellenantriebsstrang nach einem oder mehreren der vorstehenden Ansprüche, **dadurch gekennzeichnet, daß** zur Signalverarbeitung der Schalter, Regler, Sensoren sowie Aktuatoren ein CAN- Bussystem (35) Anwendung findet.

17. Zapfwellenantriebsstrang nach einem oder mehreren der vorstehenden Ansprüche, **dadurch gekennzeichnet, daß** zur Signalverarbeitung der Schalter, Regler, Sensoren sowie Aktuatoren ein Time- Trigger- Protokoll (TTP) Anwendung findet.

18. Zapfwellenantriebsstrang nach einem oder mehreren der vorstehenden Ansprüche, **dadurch gekennzeichnet, daß** am Arbeitsgerät (14) ein Jobrechner (36) installiert ist, in dem der jeweilige Typ des Arbeitsgerätes (14) gespeichert ist und der mit seinem Arbeitsgerät- Bus (37) in der landwirtschaftlichen Bus System Ausführung oder nach der Norm der Internationalen Organisation (ISO-Nr. 11783) für Standardisierung mit dem Steuergerät (16) in Verbindung steht.

## Claims

1. Take-off shaft drive train with a control system for starting and stopping a take-off shaft stub on an agricultural vehicle, particularly a tractor, consisting of:
* an input shaft (6) for connection to the engine (2),
* a hydraulically operated clutch (7), located in the drive train between the input shaft (6) and its output shaft (10), which is connected to the take-off shaft stub (12),
* a solenoid valve (9), to which pressure can be applied from the hydraulic circuit of the tractor and which is connected to the hydraulically operated clutch (7),
* a control unit (16) with a processor (17), which is connected to the solenoid valve (9) by a signal lead (33) to transmit output signals and which is connected to switches, controllers, sensors, etc to receive input signals.
**characterised in that**:
a) one of the sensors (27) is for measuring the viscosity and temperature of the hydraulic fluid,
b) at least one variably adjustable controller (22; 23) is provided for changing the flow of the hydraulic fluid and thus the time for engaging or disengaging the hydraulically operated clutch (7),
c) an additional sensor is a lifting gear position sensor (32) for establishing the momentary position of the lifting gear (15) and is connected to at least one additional variably adjustable controller (24) for determining the position of the lifting gear (15) in which the hydraulically operated clutch (7) is to engage or disengage automatically,
d) constantly improving learning starting curves for different implements (14), conditions of use and machine-specific values are stored in the control unit (16), the control unit (16) selecting the optimum learning starting curve for renewed clutch engagement and disengagement by analysing the input signals fed to it.

2. Take-off shaft drive train according to claim 1, **characterised in that** a gearbox (4), of which the transmission ration sensor (29) is connected to the control unit (16), is located between the engine (2) and the input shaft (6) of the hydraulically operated clutch (7).

3. Take-off shaft drive train according to claim 1 and 2, **characterised in that** a proportionally controlled brake (11), which is connected to the control unit (16) by a control lead (34), is located on the output shaft (10) of the hydraulically operated clutch (7) connected to the take-off shaft stub (12) of the tractor.

4. Take-off shaft drive train according to claim 1, **characterised in that** the solenoid valve (9) is a proportional valve.

5. Take-off shaft drive train according to claim 1, **characterised in that** the solenoid valve (9) is a pulsed ON/OFF solenoid valve.

6. Take-off shaft drive train according to claim 1, **characterised in that** the control unit (16) is connected to an on switch (19) for engaging the hydraulically operated clutch (7).

7. Take-off shaft drive train according to claim 1, **characterised in that** the control unit (16) is connected to an off switch (20) for disengaging the hydraulically operated dutch (7).

8. Take-off shaft drive train according to claim 1, **characterised in that** the control unit (16) is connected to a variably adjustable (22) for changing the flow of the hydraulic fluid and thus for changing the time for engaging and disengaging the hydraulically operated clutch (7) for normal mode.

9. Take-off shaft drive train according to claim 1, **characterised in that** the control unit (16) is connected to a variably adjustable (23) for changing the flow of the hydraulic fluid and thus for changing the time for engaging and disengaging the hydraulically operated clutch (7) for normal mode management mode.

10. Take-off shaft drive train according to claims 1, 8 and 9, **characterised in that** the control unit (16) is connected to a mode switch (21) for selecting normal and management mode.

11. Take-off shaft drive train according to any of the preceding claims, **characterised in that** the control unit (16) is connected to an engine speed sensor (28).

12. Take-off shaft drive train according to any of the preceding claims, **characterised in that** the control unit (16) is connected to a take-off shaft stub speed sensor (30).

13. Take-off shaft drive train according to any of the preceding claims, **characterised in that** the control unit (16) is connected to a take-off torque sensor (31).

14. Take-off shaft drive train according to any of the preceding claims, **characterised in that** the several visual or acoustic indicators, for, example a clutch lamp (25) and/or a management lamp (26) are located in the control and display unit (18) of the tractor.

15. Take-off shaft drive train according to any of the preceding claims, **characterised in that** the preset default curves are stored in a ROM of the control unit (16) as a function of the flow of hydraulic fluid fed to the hydraulically operated clutch (7) per unit of time.

16. Take-off shaft drive train according to any of the preceding claims, **characterised in that** a CAN bus system (35) is used for processing signals from the switches, controllers, sensors and actuators.

17. Take-off shaft drive train according to any of the preceding claims, **characterised in that** a time trigger protocol (TTP) is used for processing signals from the switches, controllers, sensors and actuators.

18. Take-off shaft drive train according to any of the preceding claims, **characterised in that** a job calculator (36); in which the respective type of implement (14) is stored, of which the implement bus (37), in the agricultural bus system version or according to the standard of the International Organisation for Standardisation (ISO no. 11783) is connected to the control unit (16); is installed on the implement (14).

## Revendications

1. Ligne de transmission de prise de force avec régulation pour le démarrage et l'arrêt d'un tronçon de prise de force sur un véhicule agricole, en particulier sur un tracteur, comprenant :
* un arbre d'entrée (6) pour le raccordement au moteur (2),
* un embrayage à commande hydraulique (7) qui se trouve dans la ligne de transmission entre l'arbre d'entrée (6) et son arbre de sortie (10), qui est en liaison avec le tronçon de prise de force (12),
* un électro-aimant (9) qui peut être alimenté par le circuit hydraulique du tracteur et qui est en liaison avec l'embrayage à commande hydraulique (7),
* un dispositif de commande (16) avec processeur (17) qui est relié, via une ligne de signalisation (33), avec l'électrovanne (9) pour la transmission de signaux de sortie et qui est en liaison avec des interrupteurs, des régulateurs ainsi que des capteurs, etc. pour l'enregistrement de signaux d'entrée,
**caractérisée en ce que**
a) l'un des détecteurs (27) est le détecteur qui mesure la viscosité et la température du liquide hydraulique
b) au moins un régulateur à ajustement variable (22; 23) est présent pour la modification de la quantité du liquide hydraulique et donc pour la modification du temps pour l'embrayage et le débrayage de l'embrayage à commande hydraulique (7),
c) un autre détecteur est un détecteur de position du relevage (32) constatant la position instantanée du relevage (15) qui est relié avec au moins un autre régulateur à ajustement variable (24) pour la détermination des positions du relevage (15) pour lesquelles l'embrayage à commande hydraulique (7) doit embrayer et débrayer automatiquement,
d) dans le dispositif de commande (16), des courbes de démarrage d'apprentissage qui s'améliorent constamment sont mémorisées pour divers outils (14), conditions d'utilisation et valeurs spécifiques aux machines, le dispositif de commande (16), sélectionnant à partir de là, par évaluation des signaux d'entrée qui lui sont transmis, la courbe de démarrage d'apprentissage optimale pour un nouvel embrayage et un nouveau débrayage.

2. Ligne de transmission de prise de force selon la revendication 1, **caractérisée en ce qu'**entre le moteur (2) et l'arbre d'entrée (6) de l'embrayage à commande hydraulique (7) une transmission (4) est disposée dont le détecteur de démultiplication (29) est en relation avec le dispositif de commande (16).

3. Ligne de transmission de prise de force selon les revendications 1 et 2, **caractérisée en ce que** sur l'arbre de sortie (10) de l'embrayage à commande hydraulique (7) relié avec le tronçon de prise de force (12) du tracteur, un frein à régulation proportionnelle (11) est monté, lequel est en relation avec le dispositif de commande (16) au moyen d'une ligne de commande (34).

4. Ligne de transmission de prise de force selon la revendication 1, **caractérisée en ce que** l'électrovanne (9) est une vanne proportionnelle.

5. Ligne de transmission de prise de force selon la revendication 1, **caractérisée en ce que** l'électrovanne (9) est une électrovanne ON/OFF cadencée.

6. Ligne de transmission de prise de force selon la revendication 1, **caractérisée en ce que** le dispositif de commande (16) est relié avec un commutateur (19) pour l'embrayage de l'embrayage à commande hydraulique (7).

7. Ligne de transmission de prise de force selon la revendication 1, **caractérisée en ce que** le dispositif de commande (16) est relié avec un disjoncteur (20) pour le débrayage de l'embrayage à commande hydraulique (7).

8. Ligne de transmission de prise de force selon la revendication 1, **caractérisée en ce que** le dispositif de commande (16) est relié avec un régulateur à ajustement variable (22) pour la modification de la quantité du liquide hydraulique et, donc, pour la modification du temps pour l'embrayage et le débrayage de l'embrayage à commande hydraulique (7) pour le régime normal.

9. Ligne de transmission de prise de force selon la revendication 1, **caractérisée en ce que** le dispositif de commande (16) est relié avec un régulateur à ajustement variable (23) pour la modification de la quantité du liquide hydraulique et, donc, pour la modification du temps pour l'embrayage et le débrayage de l'embrayage à commande hydraulique (7) pour le régime de direction.

10. Ligne de transmission de prise de force selon les revendications 1, 8 et 9, **caractérisée en ce que** le dispositif de commande (16) est relié avec un commutateur de mode (21) pour la sélection du régime normal ou du régime de direction.

11. Ligne de transmission de prise de force selon l'une quelconque des revendications précédentes, **caractérisée en ce que** le dispositif de commande (16) est relié avec un détecteur de vitesse de rotation du moteur (28).

12. Ligne de transmission de prise de force selon l'une quelconque des revendications précédentes, **caractérisée en ce que** le dispositif de commande (16) est relié avec un détecteur de vitesse de rotation de tronçon de prise de force (30).

13. Ligne de transmission de prise de force selon l'une quelconque des revendications précédentes, **caractérisée en ce que** le dispositif de commande (16) est relié avec un détecteur de couple de rotation (31) de tronçon de prise de force (31).

14. Ligne de transmission de prise de force selon l'une quelconque des revendications précédentes, **caractérisée en ce que** dans l'unité de commande et d'affichage (18) du tracteur, on trouve plusieurs affichages de contrôle optiques ou acoustiques, par exemple un témoin d'embrayage (25) et/ou un témoin de direction (26).

15. Ligne de transmission de prise de force selon l'une quelconque des revendications précédentes, **caractérisée en ce que** dans une mémoire à lecture seule du dispositif de commande (16) des courbes par défaut préréglées en tant que fonction de la quantité de liquide hydraulique par unité de temps conduite à l'embrayage à commande hydraulique (7) sont mémorisées.

16. Ligne de transmission de prise de force selon l'une quelconque des revendications précédentes, **caractérisée en ce que** pour le traitement du signal des commutateurs, régulateurs, capteurs et actionneurs, un système de bus CAN (35) est utilisé.

17. Ligne de transmission de prise de force selon l'une quelconque des revendications précédentes, **caractérisée en ce que** pour le traitement du signal des commutateurs, régulateurs, capteurs et actionneurs, un protocole Time-Trigger (PTT).

18. Ligne de transmission de prise de force selon l'une quelconque des revendications précédentes, **caractérisée en ce que** sur l'outil (14), un compteur de tâches (36) est installé dans lequel le type correspondant d'outils (14) est mémorisé et qui est en relation avec son BUS d'outil (37) dans la version à système BUS agricole ou, selon la norme de l'organisation internationale de normalisation (ISO N° 11783), est en relation avec le dispositif de commande (16).
